# EUROPEAN PATENT APPLICATION

(11) **EP 1 448 008 A1**
(43) Date of publication of application: **18.08.2004**
(21) Application number: 03003130.6
(22) Date of filing: 13.02.2003
(51) Int. Cl.: H04Q 7/38, H04Q 7/30

(54) **Indoor positioning of mobile terminals**

(71) Applicant: Telefonaktiebolaget LM Ericsson (publ), 164 83 Stockholm (SE)
(72) Inventor: Jeck, Michael, 90482 Nürnberg (DE); Schenzfeier-Hellkamp, Eva, 90542 Eckental (DE); Bolik, Jürgen Dr., 95445 Bayreuth (DE)
(74) Representative: Röthinger, Rainer, Dipl.-Phys.

(57) **Abstract**

A method and a system for locating mobile terminals in an indoor communications environment are described. The system includes a plurality of distributed antennas 26 that are grouped into two or more antenna subsets I, II, III which are covering different geographical indoor sectors. To each antenna subset an identification parameter I, II, III is assigned that denotes the sector covered by a particular antenna subset. A network node 28 is coupled to the distributed antennas 26 via a common signal path 30. The network node 28 includes a receiver component 34 for receiving via the common signal path 30 a signal including identification information relating to the identification parameter that is assigned to the antenna subset that has received the signal. The network node 28 further comprises a locator component for locating the mobile terminal on the basis of the identification information included in the signal.

## Description

### FIELD OF THE INVENTION

The invention relates to mobile communications. More specifically, the invention relates to a method and a system for locating mobile terminals, e.g. mobile telephones, in an indoor communications environment.

### BACKGROUND OF THE INVENTION

The common characteristic of wireless communications systems is a high degree of mobility. Nevertheless, many services and applications require knowledge about the current position of a particular recipient. Thus, positioning technologies for mobile terminals have become an important pre-requisite for practical services that provide information about e.g. the nearest restaurant as well as business-oriented services that increase efficiency by providing e.g. a navigation aid or by helping to manage a fleet of vehicles.

Different positioning methods are already available. In general, these methods are either based on intelligence in the network or on intelligence in the mobile terminal. Network-based approaches allow ordinary mobile terminals to be used further, while terminal-based approaches require special mobile terminals but in general provide better accuracy.

For second generation (2G) communications systems a network-based approach called cell global identity and timing advance (CGI + TA) has been proposed. This approach is based on the fact that the network can identify the cell surrounding a base station in which the mobile terminal is located (CGI). For the purpose of improving the positional accuracy, TA is used to determine the distance between the mobile terminal and the radio mast. Also known is the terminal-based approach of enhanced observed time difference (E-OTD). This approach requires new software in the mobile terminal that calculates the mobile terminal's position using signals from three or more base stations. The mobile terminal compares the time it takes for signals to be received from each of the base stations and uses appropriate measurement equipment to calculate its position.

For third generation (3G) communications systems network-based positioning solutions like cell ID + RTT (cell identity + round trip time) and terminal-based solutions like OTDOA (observed time difference of arrival) have been developed. Cell ID + RTT is the 3G equivalent of CGI + TA, while OTDOA works in the same manner as E-OTD.

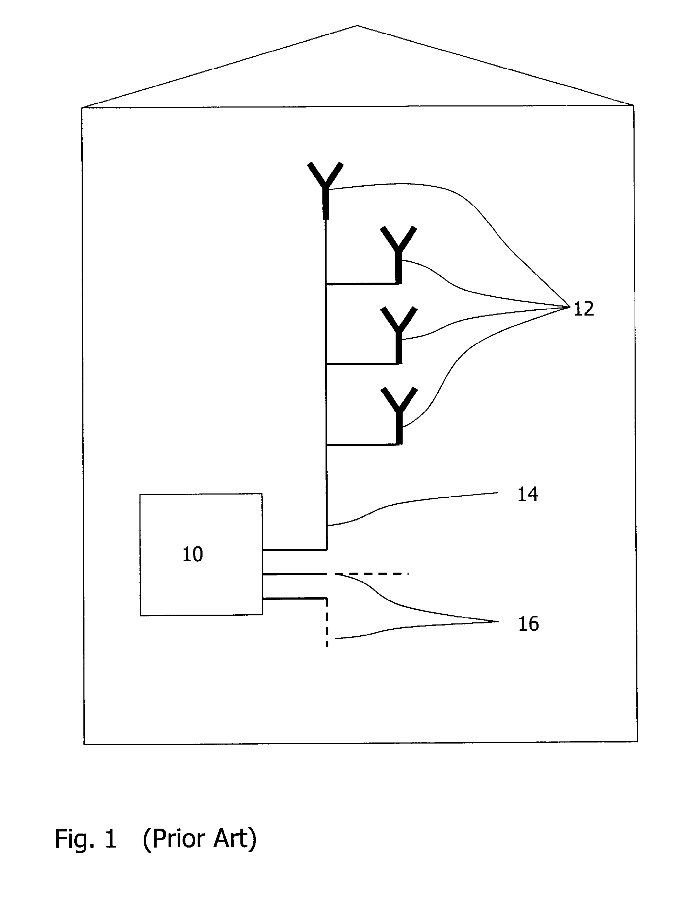

In recent years wireless indoor communications environments have become an interesting area of mobile communications. Such indoor communications environments usually include a distributed antenna system to improve and expand communication capacities within buildings. A prior art distributed antenna system for indoor communications is depicted in Fig. 1. It includes a network node 10 to which several antennas 12 are coupled via a common signal branch 14. To further extend the coverage area, additional signal branches 16 similar to the signal branch 14 may be attached to the network node 10.

In order to bring location-based services inside buildings, conventional positioning services like E-OTD or ID + RTT can be used. However, these services have originally been developed for outdoor use and are in general not accurate enough for indoor use.

Consequently, there is a need for a method and a system for accurately locating mobile terminals in an indoor communications environment.

### SUMMARY OF THE INVENTION

This need is satisfied according to the invention by a method of locating mobile terminals in an indoor communications environment in which distributed antennas are coupled to a network node via a common signal path, the method comprising grouping the antennas coupled to the common signal path into two or more antenna subsets which cover different geographical indoor sectors, assigning to each antenna subset at least one identification parameter that denotes the sector covered by this antenna subset, receiving a signal from a mobile terminal, sending the received signal via the common signal path, the signal that is being sent including identification information relating to the at least one identification parameter that is assigned to the antenna subset that has received the signal, and determining the location of the mobile terminal on the basis of the identification information.

In the case that a plurality of antennas is coupled to a common signal path, e.g. to an antenna or receiver path attached to a single port of a network node, the identification information can advantageously be exploited to distinguish signals of different antenna subsets. More specifically, since a particular antenna subset, which may comprise one or more individual antennas, is in general associated with a particular indoor sector, a transmitting mobile terminal can be located using the identification information.

Ideally, the positional resolution equals the chosen sectorization. This means that in the optimal case the identification information allows to determine the particular sector in which a mobile terminal is located. In cases where a mobile terminal can e.g. be reached via more than one antenna subset, the positional resolution may be somewhat coarser. If required, it could be improved by additional techniques discussed below.

Determining the location of a mobile terminal can be based solely on the identification information, which could be the identification parameter itself or information associated with or derived from the identification parameter. If required, further information can be taken into account for determining the location of a mobile terminal. The further information can for example relate to information about a second identification parameter that is included in addition to information about a first identification parameter in the signal sent via the common signal path. Alternatively, or in addition, the further information can be constituted by a signal quality parameter like the signal strength. Taking into account further information when determining the location of the mobile terminal is particularly advantageous in the case a signal from a mobile terminal is received via two or more antenna subsets because in such a case the further information allows a more reliable assessment of the mobile terminal's location.

A particular identification parameter may be assigned once (i.e. may be unique) or more than once (thus potentially causing ambiguities) among the antenna subsets coupled to a common signal path. The same applies if a plurality of common signal paths with corresponding antenna subsets are coupled to one or more network nodes. This means that a particular identification parameter can be assigned once or more than once among the multitude of antenna subsets attached to the plurality of common signal paths.

The identification parameter denoting a particular sector is preferably included in a signal received or transmitted by the antenna subset covering this particular sector. The process of including an identification parameter in a signal that has been received or that is to be transmitted can be performed either centrally or in a decentralized manner at locations remote from the network node to which the antenna subsets are attached. According to a particularly preferred variant of the invention this process is performed in the vicinity of the individual antenna subsets. To that end the functionality of the antenna subsets may be extended in such a way that prior to transmission or after receipt of a signal the identification parameter is inserted in the signal to be transmitted or added to the received signal.

The one or more identification parameters can have various shapes and contents as long as the basic function of the identification parameter to distinguish different antenna subsets (or, in other words, different indoor sectors) can be achieved.

According a first variant of the invention, the identification parameter can be a signal delay that may be characteristic of a particular antenna subset. Signal delays can be achieved in a passive manner (e.g. using delay lines of different lengths) or actively by means of appropriately configured signal processing devices.

According to a second variant of the invention the identification parameter comprises a code which preferably is characteristic of a particular antenna subset. Such a code may for example simply be a specific designation like a number assigned to a particular antenna subset.

According to a third variant of the invention the identification parameter comprises a signal modulation which can be characteristic of a particular antenna subset. Such a signal modulation can easily be detected e.g. by a receiving mobile terminal that may respond to detection of a specific modulation pattern by including information relating to the detected modulation type into its own transmit signal. Generally spoken, a mobile terminal may respond to receipt of a signal associated with an identification parameter by transmitting a signal including information relating to this identification parameter. Such identification information can be constituted by the identification parameter itself (e.g. a particular antenna subset number) or by a typical response (e.g. modulation format or requested power level) associated with a particular identification parameter. The identification information transmitted by the mobile terminal may then be exploited for example by a central network node or in a decentralized manner to assess the mobile terminal's location by determining the antenna subset (i.e. indoor sector) associated with the identification parameter information.

It should be noted that the three identification parameter types discussed above or other types may be combined. For example, two or more different identification parameter types could be assigned to each individual antenna subset e.g. for purposes of redundancy or improved positional resolution.

The sectorization approach allows to perform a sector-based hand over procedure for a moving mobile terminal. According to such a hand over procedure it can be insured that at a given point in time a mobile terminal is served by one or more relevant antenna subsets only. It is self evident that if a hand over has occurred from a first antenna subset to a second antenna subset, the mobile terminal must be located in the sector covered by the second antenna subset. Implementation of a hand over procedure may include assessing the identification parameters denoting the sectors involved in a particular hand over procedure to locate the mobile terminal.

To further improve the positioning accuracy and reliability, the approaches discussed above may be combined with one or more existing positioning methods like cell ID, GPS, time difference-based positioning procedures like RTT or geometrical positioning procedures like E-OTD. Moreover, it has been found that a better positioning reliability and accuracy can also be obtained by temporarily switching off selected ones of the antenna subsets.

The individual antenna subsets may be dispersed within one plane or in three dimensions. A three-dimensional arrangement of the antenna subsets allows for a location of mobile terminals in three dimensions. This is particularly advantageous in the case of multi-floor buildings.

The antenna subsets dispersed in three dimensions may all be coupled to a single signal path or to different signal paths. In a multi-floor building for example at least one common signal path may be provided for all antenna subsets located on a particular floor. A first identification parameter type may be used for distinguishing indoor sectors on a particular floor and a second identification parameter type may be used for distinguishing individual floors.

The invention can be implemented as a hardware solution or as a computer program product comprising program code portions for performing the steps of the invention when the computer program product in run on a computing device. The computer program product may be stored on a computer-readable recording medium like a data carrier.

As regards the hardware solution, the invention is directed to a system for locating mobile terminals in an indoor communications environment, the system comprising a first plurality of distributed antennas and a network node coupled to the first plurality of distributed antennas via a common first signal path. The first plurality of distributed antennas is grouped into two or more antenna subsets which are covering different geographical indoor sectors, wherein to each antenna subset at least one identification parameter is assigned that denotes the sector covered by a particular antenna subset. The network node includes a receiver component for receiving via the common first signal path a signal including identification information relating to the at least one identification parameter that is assigned to the antenna subset that has received the signal and a locator component for determining the location of the mobile terminal on the basis of the identification information.

Additionally, the system may comprise one or more elements coupled to the antenna subsets for including the identification parameter in a signal that has been received or that is to be transmitted by an individual antenna subset. Preferably, each antenna subset is associated with its own element for including the identification parameter. In the case of a delay-based identification parameter the elements may for example be configured as delay lines or buffer memories. Alternatively, or in addition, elements that perform a signal modulation or that include a code in a received signal or in a signal that is to be transmitted could be used.

Preferably, the system further includes a hand over unit for performing a sector-based hand over mechanism. The hand over mechanism can be performed on the basis of identification parameters associated with a particular hand over event. In the case the identification parameters are unique, i.e. have been assigned only once, the identification parameter of the antenna subset currently servicing a mobile terminal allows to accurately derive the area (in terms of e.g. one or more sectors) in which the mobile is located. If the identification parameters are assigned more than once, sector planning is preferably performed such that all possible hand over events are associated with unique identification parameter sequences.

In addition to the first plurality of distributed antennas the system may include at least a second plurality of distributed antennas that are coupled to the network component via a common second signal path. The grouping and functioning of the at least second plurality of distributed antennas is preferably identical with the grouping and functioning of the first plurality of distributed antennas mentioned above.

To allow for a three-dimensional location of the mobile terminals, the individual antenna subsets coupled to a common or to different signal paths may be spaced from each other both in a horizontal and a vertical direction.

### BRIEF DESCRIPTION OF THE DRAWINGS

In the following the invention will be described with reference to exemplary embodiments illustrated in figures, in which:
- Fig. 1: schematically shows a prior art distributed antenna system for indoor communications;
- Fig. 2: shows a schematic block diagram of a system according to the invention for locating mobile terminals in an indoor communications environment;
- Fig. 3: schematically shows the antenna ports of a network node shown in Fig. 2;
- Fig. 4: schematically shows an identification parameter scenario according to a first embodiment of the invention;
- Figs. 5-7: schematically show identification parameter scenarios according to a second embodiment of the invention;
- Fig. 8: schematically shows an identification parameter scenario according to a third embodiment of the invention;
- Figs. 9: schematically shows an identification parameter scenario according to a fourth embodiment of the invention; and
- Fig. 10: schematically shows an identification parameter scenario according to a fifth embodiment of the invention.

### DETAILED DESCRIPTION OF PREFERRED EMBODIMENTS

In the following description, for purposes of explanation and not limitation, specific details are set forth, such as particular hardware components, signal formats, etc. in order to provide a thorough understanding of the present invention. It will be apparent to one skilled in the art that the present invention may be practiced in other embodiments that depart from these specific details. In particular, while the different embodiments are described herein below incorporated in a wide band code division multiple assess (W-CDMA) system, the present invention is not limited to such an implementation, but for example can be utilized in any indoor communications environment that allows the use of identification parameters. Moreover, those skilled in the art will appreciate that the functions explained herein below may be implemented using individual hardware circuitry, using software functioning in conjunction with a programmed microprocessor or general purpose computer, using an application specific integrated circuit (ASIC), and/or using one or more digital signal processors (DSPs).

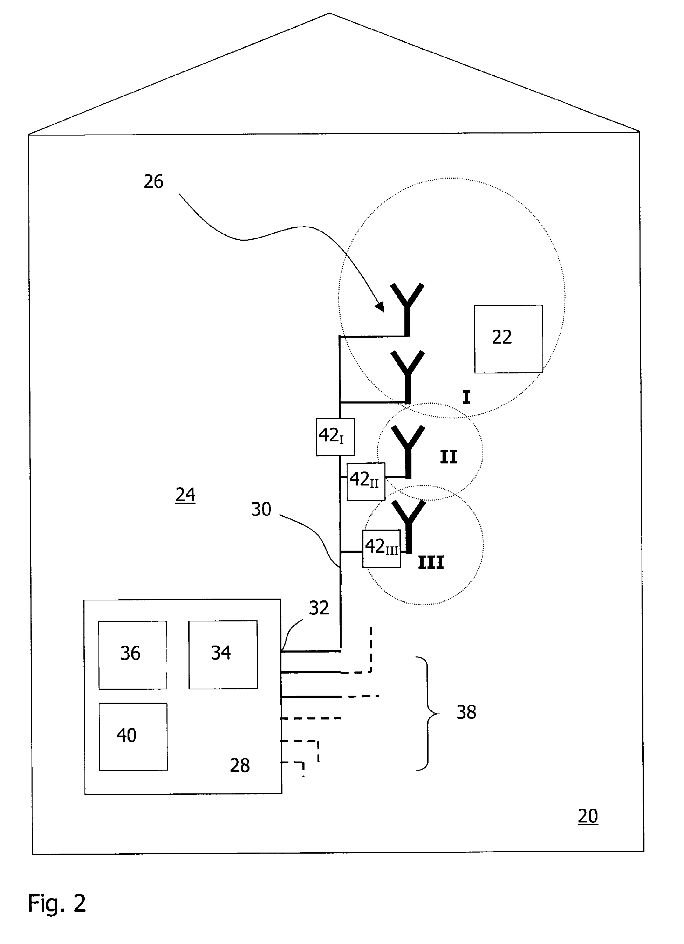

In Fig. 2 an indoor communications environment according to the invention is shown. The indoor communications environment includes a plurality of hardware components that are installed within a building 20. Although in Fig. 2 all hardware components are located within the building 20, one ore more of these components could in principle be located outside the building 20, e.g. in a neighboring building.

The indoor communications environment depicted in Fig. 2 includes one or more mobile terminals 22 in the form of mobile telephones and a multi-functional system 24 for establishing communication links with the mobile terminals 22 and for locating the mobile terminals 22. The system 24 includes a distributed antenna system 26 with a plurality of individual antennas and a network node 28 functioning as a radio base station (RBS).

The individual antennas of the distributed antenna system 26 are grouped into three subsets that cover three different geographical indoor sectors. A first indoor sector and a first antenna subset consisting of two individual antennas covering this first indoor sector are jointly designated I. A second indoor sector and a second antenna subset consisting of a single antenna are jointly designated II. A third indoor sector as well as a third antenna subset consisting of a single antenna are jointly designated III. The designations I, II and III can be interpreted as identification parameters for individualizing the antenna subsets and the sectors covered by them.

The network node 28 is coupled to the individual antennas of the distributed antenna system 26 via a common signal path 30. The common signal path 30 is thus configured as a antenna path terminating at a single antenna port 32 of the network node 28. Besides the common signal path 30, several additional common signal paths 38 similar to the common signal path 30 are attached to further antenna ports of the network node 28.

As can be seen from Fig. 2, the network node 28 comprises a receiver component 34 and a locator component 36. The receiver component 34 is coupled to the antenna port 32 and allows to receive, demodulate, etc. antenna signals received via the common signal path 30 or any one of the other common signal paths 38. The locator component 36 allows to locate a mobile terminal on the basis of identification information that is included in a signal received by the network node 28 via one of the common signal paths 30, 38.

The network node 28 further includes a hand over unit 40 for performing a sector-based hand over mechanism. Such a hand over mechanism is for example required if the mobile terminal 22, which in Fig. 2 is located in sector I, moves into sector II.

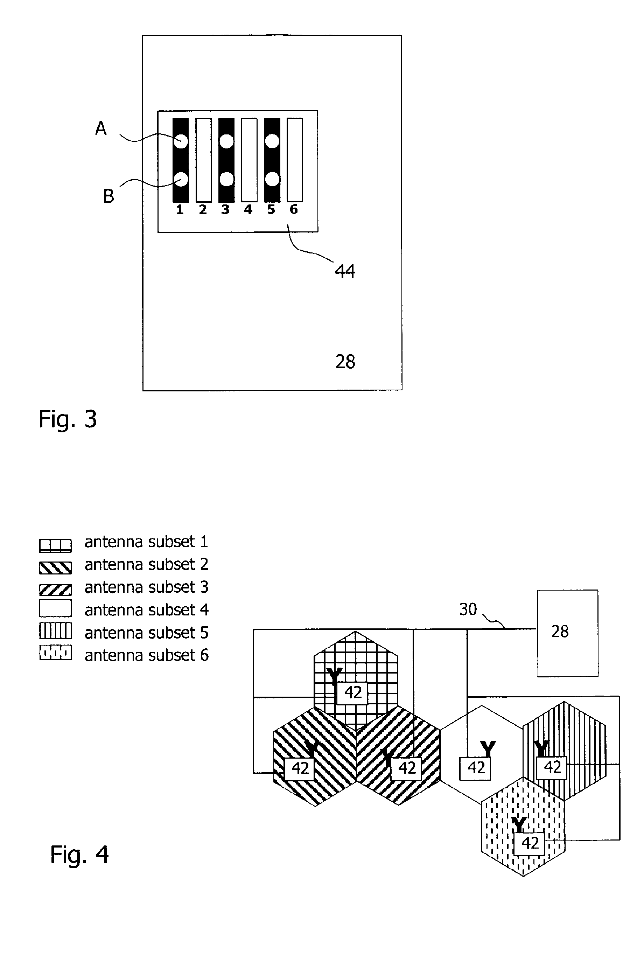

In order to include an identification parameter in a signal received or transmitted by one of the antenna subsets I, II and III, dedicated elements 42_{I}, 42_{II}, 42_{III} are coupled in the common signal path 30 between each of the antenna subsets I, II and III on the one hand and the antenna port 32 of the network node 28 on the other hand. With respect to the network node 28 the individual elements 42 are arranged in a decentralized manner in the vicinity of the respective antenna subsets I, II, III. Various exemplary implementations of the elements 42 will be discussed later with reference to Figs. 4 to 10.

For a better understanding of an exemplary technical realization of the invention, the antenna port configuration of the network node 28 will now be explained with reference to Fig. 3.

As becomes apparent from Fig. 3, the network node 28 includes a rack 44 with 6 individual slots. The slots are numbered from 1 to 6. Three transceiver (TRX) boards have been inserted into the slots of the rack 44. More specifically, a first TRX board has been inserted in slot 1, a second TRX board has been inserted in slot 3 and a third TRX board has been inserted in slot 5.

For allowing a receiver (RX) diversity operation, each TRX board has two receiver paths A, B that terminate at respective antenna ports indicated by white circles in Fig. 3. Thus, the network node 28 has a total of 6 antenna ports. This means that 6 different sector groups (1 sector group per antenna port/RX path) can be distinguished due to the specific hardware configuration. These becomes apparent from the following table 1:

**Table 1:**

| Sector groups | | |
|---|---|---|
| Slot (TRX Board) | RX path (antenna port) | (TRX, RX) combination (=sector group) |
| 1 | A | 1 |
| 1 | B | 2 |
| 3 | A | 3 |
| 3 | B | 4 |
| 5 | A | 5 |
| 5 | B | 6 |

The specific hardware configuration depicted in Fig. 3 thus allows to distinguish (on a hardware level) between antenna signals received via 6 different antenna ports. If for example each antenna port is coupled to an individual antenna or group of antennas covering a particular indoor sector, 6 different indoor sector can be addressed on a hardware level, e.g. by consecutive numbers 1,2,...6 (sector addresses).

This becomes apparent from the second column of table 2 below:

**Table 2:**

| Example of an RX sector assignment | | | | |
|---|---|---|---|---|
| number of sector group | sector address (no or only 1 ID parameter value / 0 or 1 antenna subset) | sector address (2 different ID parameter values / 2 antenna subsets) | ... | sector address (n different ID parameter values / n antenna subsets) |
| 1 | 1 | 7 | | 1+(n-1)×6 |
| 2 | 2 | 8 | | 2+(n-1)×6 |
| 3 | 3 | 9 | | 3+(n-1)×6 |
| 4 | 4 | 10 | | 4+(n-1 )×6 |
| 5 | 5 | 11 | | 5+(n-1)×6 |
| 6 | 6 | 12 | | 6+(n-1)×6 |

From the third column of table 2 it can be seen that by using two different identification parameter values of a specific identification parameter type (e.g. two delay values), each plurality of antennas coupled to an individual antenna port could be divided into two antenna subsets. In other words, the number of individual sectors per antenna port (i.e. per sector group) is doubled compared to the situation that no (or only one) identification parameter value is defined.

In the case of 6 antenna ports (i.e. 6 sector groups) and two different identification parameter values a total of 12 sectors can be addressed by consecutive numbers 1, 2, 3, ... 12 (second and third column in table 2). If n different identification parameter values are defined, each of the 6 sector groups will comprise n individual sectors. In total, 6xn sectors will thus be available that can be addressed by consecutive numbers 1, 2, 3... 6+(n-1)x6 (see table 2).

If the number of identification parameter values of a specific identification parameter type is limited to e.g. n (i.e. if the total number of individual sectors is limited in the above scenario to 6xn), the positional resolution can be improved further by additionally taking into account conventional positioning methods. For example an additional RTT mechanism could be implemented to also assess a signal round trip time for a mobile terminal to be located.

The considerations depicted in table 2 mirror the assumption that a single identification parameter type (e.g. a signal delay) is divided into n categories (e.g. n cable lengths). Of course, the number of available sectors can be drastically increased if a second identification parameter type (e.g. a modulation format) is additionally used to distinguish individual sectors.

In the following, various exemplary embodiments of identification parameters types that can be used in context with locating a mobile terminal will be explained. Combinations of two or more of these types can be employed to expand the coverage area or the positional resolution.

### 1. Code-Based Identification Parameter

According to the code-based scenario, to each antenna subset a preferably unique identification code (e.g. identification number) is assigned.

As can be seen from Fig. 4, six antenna subsets to which the numbers 1, 2, ...6 are assigned define six geographical indoor sectors. Each antenna subset 1, 2, ...6 is associated with a signal processing device 42 that includes the specific identification number associated with a particular antenna subset in a signal received by the respective antenna subset from a mobile terminal. The signal received from the mobile terminal including the identification number of the antenna subset that has received the signal is transmitted the via the common signal path 30 to the network node 28. The locator component (not depicted in Fig. 4) of the network node 28 extracts the identification number from the signal that has been sent via the common signal path 30 to determine the antenna subset that originally received the signal from the mobile terminal. Simultaneously with identifying this antenna subset the indoor sector covered by this antenna subset and thus the location of the mobile terminal is obtained.

In the case two or more antenna subsets simultaneously receive a signal from a particular mobile terminal the positioning resolution is somewhat coarser. For example in the case that two antenna subsets receive the signal one obtains the information that the mobile terminal is located in one of two sectors. If required, in such a case additional information besides the identification parameter can be taken into account. This additional information may e.g. be a signal strength or information that has been derived by means of conventional positioning methods like RTT or OTDOA.

### 2. Delay-Based Identification Parameter

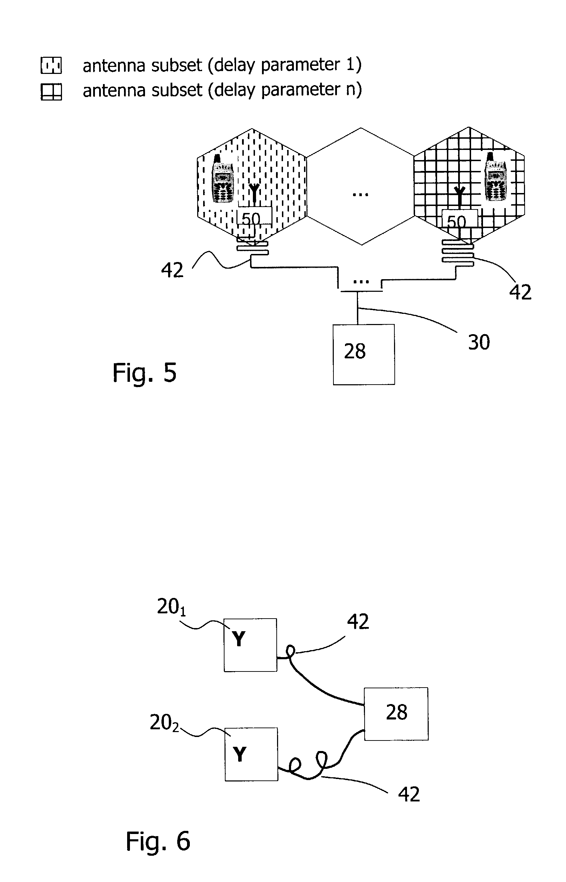

Instead of or in addition to using the identification codes explained above, delay-based identification parameters may be used as depicted in Figures 5 to 7.

According to the delay-based approach artificially introduced delays are used to assign received signals to individual sectors. The artificial delay may be generated using delay elements 42 in the form of cables having different lengths (as depicted in Fig. 5) or by means of appropriate signal processing devices that process the received signal to introduce a delay characteristic of a particular antenna subset. In the case signal processing devices are used the delay associated with a particular antenna subset may be adjustable to cope with varying conditions.

In the scenario depicted in Fig. 5 each antenna subset is associated with a remote unit 50. Each remote unit 50 may be connected to an optical unit within the network node 28 by optical links. The optical unit within the network node 28 replaces a power amplifier and interfaces directly to the transceiver, thus eliminating the need for linear power amplifiers or antenna filter units.

For a reliable sector denotation the distance between the antenna subsets and the corresponding remote units 50 plus the distance between the mobile terminal and the relevant antenna subsets (i.e. the antenna subsets which are deployed in order to receive the considered signals) should be small compared to the delay parameter differences (e.g. cable lengths differences) used for sector denotation.

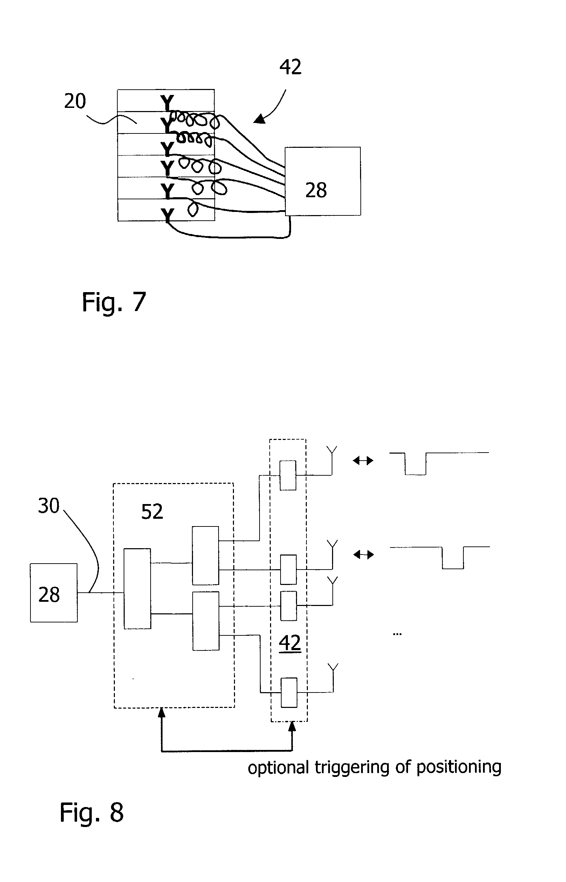

By means of identification parameters, and delay parameters in particular, it is possible to distinguish different buildings 20₁, 20₂ (see Fig. 6) or different floors in one and the same building 20 (see Fig. 7).

### 3. Modulation-Based Identification Parameter

According to a further possibility, identification parameters in the form of different modulation patterns may be used to characterize individual antenna subsets, i.e. individual sectors. A possible scenario is depicted in Fig. 8.

As becomes apparent from Fig. 8, a network node 28 (or a receiving unit) is coupled by a common signal path 30 to a passive distribution network 52. The passive distribution network 52 is coupled by a modulator system 42 to individual antenna subsets. The modulator system 42 insures that the signal transmitted from each antenna subset is (additionally) modulated with a unique modulation pattern characterizing a specific antenna subset.

A mobile terminal that receives the signal transmitted by one of the antenna subsets demodulates the received signal to determine the specific modulation pattern. In response to detection of a particular modulation pattern the mobile terminal includes identification information associated with the particular modulation pattern in a signal that is transmitted back to the network node 28. If the modulation pattern includes e.g. characteristic signal strength variations, the corresponding identification information transmitted by the mobile terminal may comprise appropriate power control commands at characteristic points in time that are to be evaluated by the network node 28.

Alternatively, or in addition, look-up table may be used that associates individual modulation patterns and corresponding identification information. Preferably, there is a one-to-one correspondence between a particular modulation pattern detected by the mobile terminal and the identification information that is transmitted by the mobile terminal.

The network node 28 evaluates the identification information included in the signal received via the common signal path 30 from the mobile terminal to determine the specific modulation pattern and thus the one or more antenna subsets servicing the mobile terminal.

Optionally, there can be a triggering link between the passive distribution network 52 and the modulator system 42 for triggering the positioning procedure (see Fig. 8). Further, it has been found that the position of a mobile terminal can be detected even more accurate if relevant antenna subsets are switched off for short time intervals during the positioning procedure.

### 4. Hand Over Mechanisms & Hand Over-Based Identification

When a mobile terminal is moving between sectors covered by different antenna subsets, a hand over procedure between two or more adjacent antenna subsets may be implemented. Assuming a hand over event from a first antenna subset to a second antenna subset, it is self evident that the mobile terminal must be located in the sector covered by the second antenna subset.

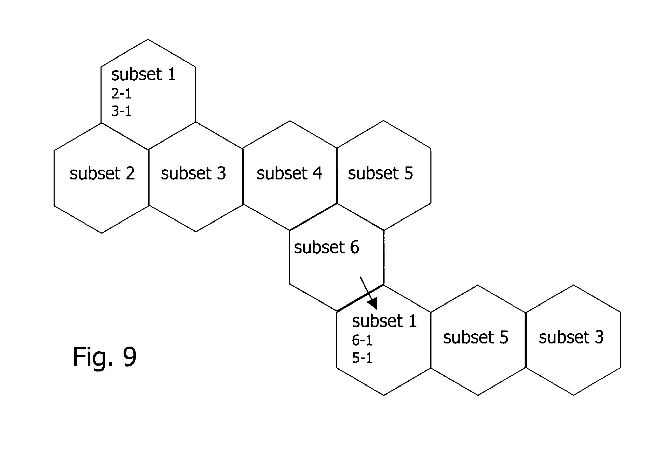

In the case the antenna subsets (and thus the sectors) are denoted by unique identification parameters, the hand over mechanism will in general not result in a better positioning accuracy. However, if identification parameters have ambiguously been assigned more than once among the antenna subsets, the information obtained during a hand over procedure may be used to locate a specific mobile terminal more accurately. In Fig. 9 a plurality of sectors with corresponding antenna subsets are depicted to illustrate this.

All the antenna subsets depicted in Fig. 9 are attached to a common signal path. As can be seen from Fig. 9, identification codes are used to distinguish different antenna subsets. However, individual identification codes are assigned more than once. For example the identification codes 1, 3 and 5 have been assigned twice. This leads to certain ambiguities as regards the location of a particular mobile terminal. Thus, assessment of the mere identification code by the network node is not sufficient to exactly locate a mobile terminal in the case one of the identification codes 1, 3 and 5 is included in a signal received by the network node via the signal path.

In order to cope with such ambiguities an intelligent sector planning is required. The sector planning has to be performed such that the identification code sequence involved in a hand over procedure uniquely denotes the sector into which the mobile terminal is moving.

As becomes apparent from Fig. 9, a first sector with the identification code 1 is located adjacent to two sectors associated with the identification codes 2 and 3, respectively. A second sector associated with the identification code 1 is located adjacent to two sectors associated with the identification codes 6 and 5, respectively.

If there is for example a hand over event for a mobile terminal moving into the second sector denoted with the identification code 1 from the sector denoted with identification code 6 (see arrow), the resulting identification code sequence "6-1" uniquely denotes the second sector associated with the identification code 1 because the first sector associated with the identification code 1 cannot be directly be entered from a sector denoted with the identification code 6 (but only from sectors denoted with 2 and 3, thus corresponding to hand over sequences "2-1" or "3-1").

The combination of for example code-based identification parameters that have been ambiguously assigned in combination with an intelligent sector planning that leads to unique handover sequences thus allows to expand the positioning capabilities.

### 5. Identification Parameter Combining for Three Dimensional Positioning

Various approaches may be used for three-dimensional positioning. In general it will be necessary to disperse the individual antenna subsets coupled to one or more signal paths both in a horizontal and a vertical direction.

In order to achieve a high positioning resolution, a first identification parameter type may be used to distinguish antenna subsets, and thus indoor sectors, that are arranged within on and the same two-dimensional plane. A second identification parameter type may be used to distinguish different two-dimensional planes.

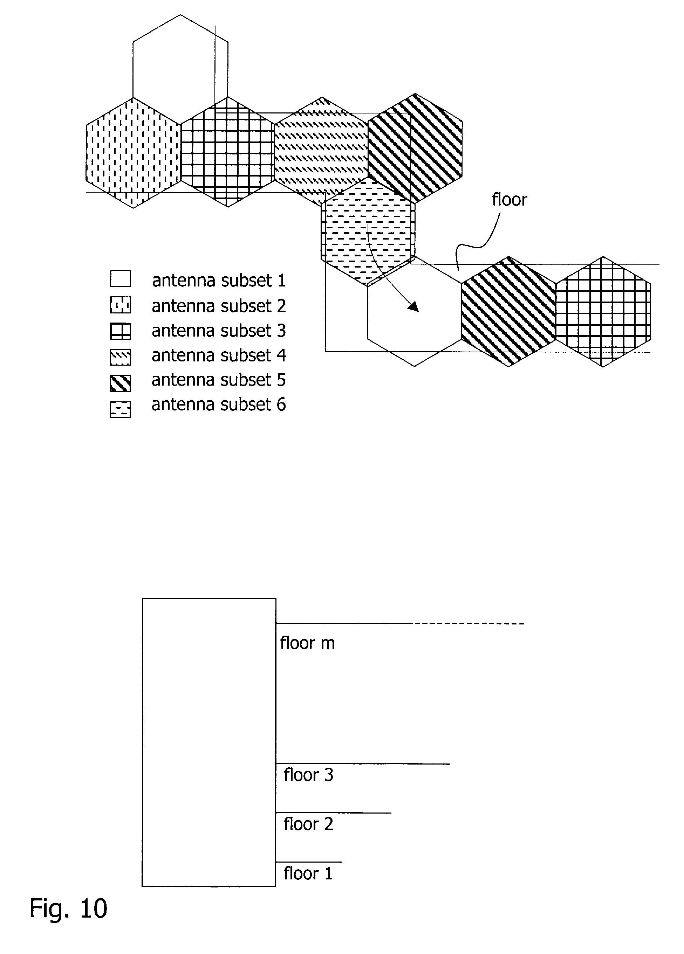

According to the exemplary approach depicted in Fig. 10, ambiguous identification codes in combination with unique handover sequences are used to distinguish indoor sectors which are arranged on a particular floor (upper portion of Fig. 10). Individual delay parameters (cable lengths) are used to identify individual floors (Fig. 10, lower portion). Consequently, a combination of a unique hand over sequence and a unique signal delay allows to exactly determine the location of a mobile terminal in three dimensions within a building.

While the present invention has been described with respect to particular embodiments, those skilled in the art will recognize that the present invention is not limited to the specific embodiments described and illustrated herein. Therefore, while the present invention has been described in relation to its preferred embodiments, it is to be understood that this disclosure is only illustrative. Accordingly, it is intended that the invention be limited only by the scope of the claims appended hereto.

## Claims

1. A method of locating mobile terminals (22) in an indoor communications environment in which distributed antennas (26) are coupled to a network node (28) via a common signal path (30), comprising:
- grouping the antennas (26) coupled to the common signal path (30) into two or more antenna subsets which are covering different geographical indoor sectors;
- assigning to each antenna subset at least one identification parameter (I, II, III) that denotes the sector covered by this antenna subset;
- receiving a signal from a mobile terminal (22);
- sending the received signal via the common signal path (30), the signal that is being sent including identification information relating to the at least one identification parameter (I, II, III) that is assigned to the antenna subset that has received the signal; and
- determining the location of the mobile terminal (22) on the basis of the identification information.

2. The method of claim 1, further comprising including the at least one identification parameter that denotes a particular sector in a signal received or transmitted by the antenna subset covering this particular sector.

3. The method of claim 2, wherein identification parameters are included in the received or transmitted signal in a decentralized manner at locations remote from the network node (28).

4. The method of one of claims 1 to 3, wherein the at least one identification parameter includes at least one of a signal delay, a code and a signal modulation.

5. The method of one of claims 1 to 4, wherein a mobile terminal (22) responds to receipt of a signal associated with an identification parameter by transmitting a signal including information relating to this identification parameter.

6. The method of one of claims 1 to 5, further comprising performing a sector-based hand over procedure.

7. The method of claim 6, wherein the identification parameters denoting the sectors involved in the hand over procedure are assessed to locate the mobile terminal (22).

8. The method of one of claims 1 to 7, further comprising temporarily switching off selected ones of the antenna subsets.

9. The method of one of claims 1 to 8, wherein the antenna subsets are dispersed in three dimensions to allow for a location of mobile terminals in three dimensions.

10. A system (24) for locating mobile terminals (22) in an indoor communications environment, comprising:
- a first plurality of distributed antennas (26) that are grouped into two or more antenna subsets which are covering different geographical indoor sectors, wherein to each antenna subset at least one identification parameter (I, II, III) is assigned that denotes the sector covered by a particular antenna subset;
- a network node (28) coupled to the first plurality of distributed antennas (26) via a common first signal path (30), the network node (28) having
a receiver component (34) for receiving via the common first signal path (30) a signal including identification information relating to the at least one identification parameter that is assigned to the antenna subset that has received the signal and
a locator component (36) for locating the mobile terminal (22) on the basis of the identification information.

11. The system of claim 10, further comprising one or more elements (42) coupled to the antenna subsets for including the identification parameter in a signal received or transmitted by an individual antenna subset.

12. The system of claim 10 or 11, wherein the antenna subsets coupled to a common or to different signal paths are spaced from each other both in a horizontal and a vertical direction to allow for a three-dimensional location of the mobile terminals (22).
